# EUROPÄISCHE PATENTSCHRIFT

(11) **EP 0 806 455 B1**
(45) Veröffentlichungstag und Bekanntmachung des Hinweises auf die Patenterteilung: **28.08.2002**
(21) Anmeldenummer: 97107568.4
(22) Anmeldetag: 07.05.1997
(51) Int. Cl.: C09B 23/06, C09B 23/16, B41M 5/38

(54) **Methin- und Azamethinfarbstoffe auf Basis von Trifluormethylpyridonen**
Methine and azamethine dyes derived from trifluoromethylpyridones
Colorants méthines et azaméthines dérivés de trifluorométhylpyridones

(30) Priorität: 08.05.1996 DE 19618528
(43) Veröffentlichungstag der Anmeldung: 12.11.1997
(73) Patentinhaber: DyStar Textilfarben GmbH & Co. Deutschland KG, 65926 Frankfurt am Main (DE)
(72) Erfinder: Grund, Clemens, Dr., 68199 Mannheim (DE); Reichelt, Helmut, Dr., 67435 Neustadt (DE); Schmidt, Andreas, Dr., 67251 Freinsheim (DE); Beckmann, Stefan, Dr., 67098 Bad Dürkheim (DE)

(56) Entgegenhaltungen:
- EP-A- 0 691 382
- DE-A- 4 440 066
- JP-A- 1 068 743
- JP-A- 8 122 972
- JP-A- 8 171 173

## Beschreibung

Die vorliegende Erfindung betrifft neue Methin-, und Azamethinfarbstoffe auf Basis von Trifluormethylpyridonen, ein Verfahren zu ihrer thermischen Übertragung sowie ein Verfahren zum Färben oder Bedrucken von synthetischen Materialien und ihre Verwendung.

Methin-(Polymethin-)farbstoffe, wie sie z.B. im Römpp Chemie Lexikon, 9. Aufl., 1995, Bd. 5, S. 3555 beschrieben werden, sind weit verbreitet und besitzen eine große technische Bedeutung, z.B. als photographische Sensibilisatoren und als Laser- und Textilfarbstoffe. Allgemein handelt es sich bei ihnen um substituierte oder unsubstituierte Polyene, die zwei endständige auxo-chrome Gruppen aufweisen, wobei es sich um jeweils eine Donor- und eine Akzeptorgruppe handelt, die als "push-pull-System" wirken.

In der JP 1993 339237 ist die Herstellung von 1-Alkyl-2-cyano-4-trifluormethyl-6-hydroxypyrid-2-onen beschrieben. Weiterhin sind aus der JP 1993 331382 sowie aus Bull.Chem.Soc. Japan, Bd. 66, S. 1790-1794, 1993, Azofarbstoffe bekannt, die die obengenannte Verbindung als Kupplungskomponente aufweisen.

Diese Azofarbstoffe sind jedoch hinsichtlich ihrer anwendungstechnischen Eigenschaften und speziell der Verwendung zur Übertragung von Farbstoffen von einem Träger durch Diffusion oder Sublimation und der Verwendung zum Färben und Bedrucken von synthetischen Materialien noch verbesserungsbedürftig.

Der vorliegenden Erfindung liegt die Aufgabe zugrunde, neue Farbstoffe auf Basis von Trifluormethylpyridonen mit verbesserten anwendungstechnischen Eigenschaften zur Verfügung zu stellen.

Überraschenderweise wurde nun gefunden, daß diese Aufgabe von Methin- und Azamethinfarbstoffen auf Basis von Trifluormethylpyridonen gelöst wird.

Gegenstand der vorliegenden Erfindung sind daher Methin- oder Azamethinfarbstoffe der Formel I 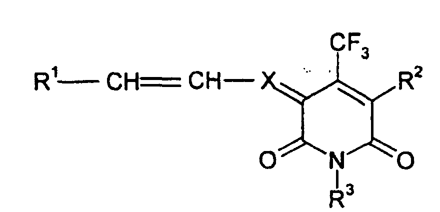 worin
- X: für Stickstoff oder CH steht,
- R¹: für einen Rest der Formeln 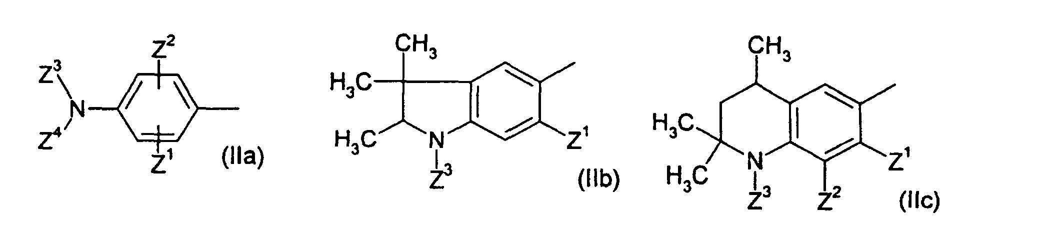 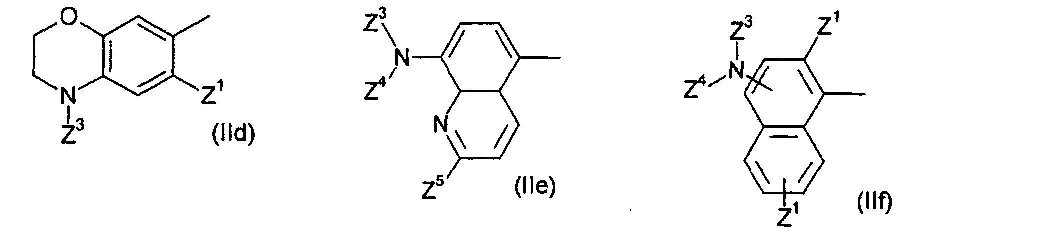 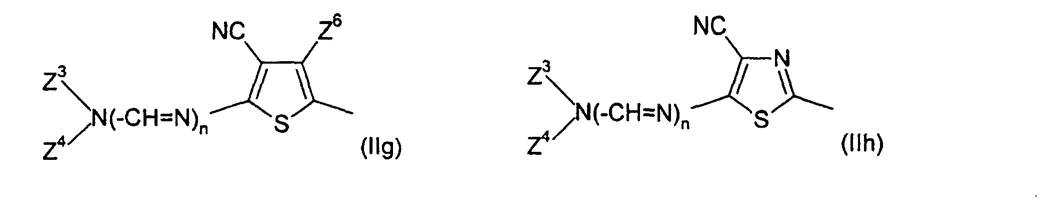 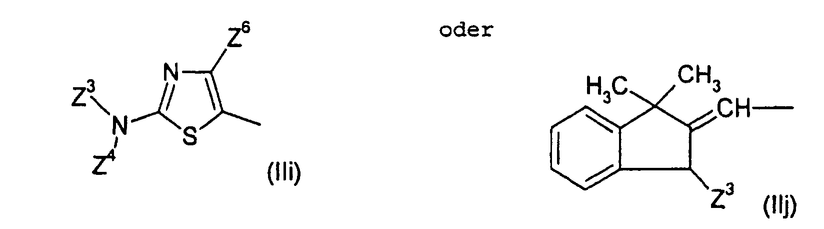 steht, worin
n für 0 oder 1 steht,
Z¹ für Wasserstoff, Alkyl, das durch 1, 2 oder 3 Sauerstoffatome unterbrochen sein kann, Hydroxy, Alkoxy, Alkylsulfonylamino, Mono- oder Dialkylaminosulfonylamino oder den Rest -NHCOZ⁷ oder -NHCO₂Z⁷ steht,worin Z⁷ für Phenyl, Benzyl, Tolyl oder Alkyl, das durch 1, 2 oder 3 Sauerstoffatome unterbrochen sein kann, steht, und
Z² für Wasserstoff, Alkyl oder Alkoxy steht;
Z³ und Z⁴ gleich oder verschieden sein können und die oben für E¹ bzw. E² angegebenen Bedeutungen besitzen oder für Alkenyl stehen, oder
Z³ und Z⁴ zusammen mit dem Stickstoffatom, an das sie gebunden sind, für einen 5- bis 6-gliedrigen gesättigten heterocyclischen Rest, der ein oder zwei weitere Heteroatome, ausgewählt unter O, N und S, enthalten kann, stehen
Z⁵ für Wasserstoff oder Alkyl steht; und
Z⁶ für Wasserstoff, Halogen, Alkyl, Phenyl, Phenylalkyl, Cycloalkyl, Thienyl, Hydroxy, Alkoxy, Alkylthio oder Monoalkylamino steht, wobei die beiden Phenylreste einen, zwei oder drei der folgenden Substituenten: Alkyl, Alkoxy, Halogen, Nitro oder Carboxyl tragen können.
- R²: für Cyano, Carbamoyl, Carboxy, Alkoxycarbonyl oder Alkanoyl steht, und
- R³: für Alkyl, welches durch eine, zwei oder drei der folgenden Gruppen: Alkanoyloxy, Alkylaminocarbonyloxy, Alkoxycarbonyl, Alkoxycarbonyloxy, wobei die Alkylgruppe der drei letztgenannten Reste durch 1, 2 oder 3 Sauerstoffatome unterbrochen sein und durch Phenyl oder Phenoxy substituiert sein kann, Cycloalkyl, welches 1, 2, 3, 4 oder 5 Alkylgruppen tragen kann, Aryl, welches einen, zwei oder drei Substituenten, die unter Alkyl, Alkoxy, Halogen, Nitro oder Carboxyl ausgewählt sind, tragen kann,
Cycloalkyloxy, Phenoxy, Halogen, Alkoxy, Hydroxy oder Cyano substituiert und/oder durch 1, 2 oder 3 Sauerstoffatome unterbrochen sein kann,
Cycloalkyl, welches durch 1, 2, 3, 4 oder 5 Alkylsubstituenten substituiert sein kann,
Aryl, welches einen, zwei oder drei der folgenden Substituenten: Alkyl, Alkoxy, Halogen, Nitro oder Carboxyl tragen kann oder einen Rest der Formel NE¹E² steht, worin E¹ und E² gleich oder verschieden sein können und die für R³ angegebenen Bedeutungen besitzen können (ausgenommen NE¹E²) oder für Pyridyl, welches einen, zwei oder drei der folgenden Substituenten: Alkyl, Alkoxy, Halogen, Nitro oder Carboxyl tragen kann, Alkanoyl, Alkoxycarbonyl, Alkylsulfonyl, Cycloalkylsulfonyl, Phenylsulfonyl, welches gegebenenfalls substituiert sein kann, Pyridylsulfonyl, welches gegebenenfalls substituiert sein kann, Benzoyl, welches gegebenenfalls substituiert sein kann, Pyridylcarbonyl, oder Thienylcarbonyl stehen,
oder
- E¹ und E²: zusammen mit dem Stickstoff, an das sie gebunden sind, für Succinimido, welches einen oder zwei Alkylsubstituenten tragen kann, Phthalimido, welches einen oder zwei C₁-C₄-Alkylsubstituenten tragen kann, oder einen 5- bis 6-gliedrigen gesättigten heterocyclischen Rest, der gegebe nenfalls durch eine oder mehrere Alkylgruppen substituiert sein und/oder 1 oder 2 weitere Heteroatome, ausgewählt unter O, N und S, aufweisen kann,
stehen,
und die Salze davon.

Soweit die genannten Reste zwei oder mehrere Substituenten aufweisen, können diese gleich oder verschieden sein.

Im Rahmen der vorliegenden Erfindung steht Halogen für Fluor, Chlor, Brom oder Jod und insbesondere für Chlor und Brom.

Der Ausdruck 'Alkyl' umfasst geradkettige und verzweigte Alkylgruppen. Vorzugsweise handelt es sich dabei um geradkettige oder verzweigte C₁-C₁₃-Alkyl-, insbesondere C₁-C₈-Alkyl-, bevorzuger C₁-C₆-Alkyl- und besonders bevorzugt C₁-C₄-Alkylgruppen. Beispiele für Alkylgruppen sind insbesondere Methyl, Ethyl, Propyl, 1-Methylethyl, Butyl, 1-Methylpropyl, 2-Methylpropyl, 1,1-Dimethylethyl, n-Pentyl, 1-Methylbutyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 1-Methylhexyl, 1-Ethylpentyl, 2-Ethylpentyl, 1-Propylbutyl, Octyl, Decyl, Dodecyl.

Substituierte Alkylreste weisen vorzugsweise 1, 2 oder 3 Substituenten, insbesondere 1 oder 2 Substituenten in beliebiger Position auf.

Alkylreste, die durch Sauerstoffatome unterbrochen sind, weisen bevorzugt 1 oder 2 Sauerstoffatome auf.

Die obigen Ausführungen zur Alkylgruppe gelten in entsprechender Weise, für die Alkylgruppe in Alkoxy, Alkylsulfonylamino, Alkylaminosulfonylamino, Alkanoyl, Alkoxycarbonyl, Alkylsulfonyl etc.

Die Alkenylgruppe umfasst geradkettige und verzweigte Alkenylgruppen. Vorzugsweise handelt es sich dabei um geradkettige oder verzweigte C₂-C₁₂-Alkenylgruppen und insbesondere C₂-C₆-Alkenylgruppen und besonders bevorzugt C₃-C₄-Alkenylgruppen. Beispiele für Alkenylgruppen sind 2-Propenyl, 2-Butenyl, 3-Butenyl, 1-Methyl-2-propenyl, 2-Methyl-2-propenyl, 2-Pentenyl, 3-Pentenyl, 4-Pentenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-2-propenyl, 1-Ethyl-2-Dropenyl, 2-Hexenyl, 3-Hexenyl, 4-Hexenyl, 5-Hexenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,2-Dimethyl-2-butenyl, 1,1-Dimethyl-3-butenyl, 1,1-Dimethyl-3-butenyl, 1,2-Dimethyl-2-butenyl, 1,2-Dimethyl-3-butenyl, 1,3-Dimethyl-2-butenly, 1,3-Dimethyl-3-butenyl, 2.2-Dimethyl-3-butenyl, 2,3-Dimethyl-2-butenyl, 2,3-Dimethyl-3-butenyl, 1-Ethyl-2-butenyl, 1-Ethyl-3-butenyl, 2-Ethyl-2-butenyl, 2-Ethyl-3-butenyl, 1,1,2-Trimethyl-2-propenyl, 1-Ethyl-1-methyl-2-propenyl und 1-Ethyl-2-methyl-2-propenyl, insbesondere 2-Propenyl, 1-Methyl-2-propenyl und 2-Methyl-2-propenyl.

Bei der Cycloalkylgruppe handelt es sich vorzugsweise um eine C₅-C₇-Cycloalkylgruppe, wie Cyclopentyl, Cyclohexyl oder Cycloheptyl.

Wenn die Cycloalkylgruppe substituiert ist, weist sie vorzugsweise 1, 2, 3, 4 oder 5, insbesondere 1, 2 oder 3 Alkylreste als Substituenten auf.

Aryl steht vorzugsweise für Phenyl oder Naphthyl und insbesondere für Phenyl.

Substituierte Aryl- oder Pyridylreste weisen als Substituenten, z.B. C₁-C₈-Alkyl, C₁-C₈-Alkoxy, Halogen, Nitro oder Carboxyl auf. Dabei sind in der Regel 1, 2 oder 3 Substituenten bevorzugt.

Phenylalkyl steht vorzugsweise für Phenyl-C₁-C₄-alkyl, insbesondere Benzyl.

Bevorzugte Reste R³, E¹, E², Z¹, Z², Z³, Z⁴, Z⁵, Z⁶ und Z⁷ sind z.B. Methyl, Ethyl, Propyl, Isopropyl, Butyl, Isobutyl, sec.-Butyl oder tert.-Butyl.

Bevorzugte Reste R³, E¹, E², Z¹, Z³, Z⁴, Z⁶ und Z⁷ sind weiterhin C₅-C₁₃-Alkyl, z.B. Pentyl, Isopentyl, Neopentyl, tert.-Pentyl, Hexyl, 2-Methylpentyl, Heptyl, Octyl, 2-Ethylhexyl, Isooctyl, Nonyl, Isononyl, Decyl, Isodecyl, Undecyl, Dodecyl, Tridecyl oder Isotridecyl. [Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmann's Encyclopedia of Industrial Chemistry, 5th Edition, Vol. A1, Seiten 290 bis 293, sowie Vol. A 10, Seiten 284 und 285).]

Bevorzugte Reste R³, E¹, E², Z¹, Z³, Z⁴ und Z⁷ sind weiterhin Alkyl, das durch 1, 2 oder 3 Sauerstoffatome unterbrochen ist, z.B. 2-Methoxyethyl, 2-Ethoxyethyl, 2-Propoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Butoxybutyl, 3,6-Dioxaheptyl, 3,6-Dioxaoctyl, 4.8-Dioxanonyl, 3,7-Dioxaoctyl, 3.7-Dioxanonyl, 4,7-Dioxaoctyl, 4,7-Dioxanonyl, 4,8-Dioxadecyl, 3,6,9-Trioxadecyl oder 3,6,9-Trioxaundecyl.

Bevorzugte Reste Z¹, Z² und Z⁶ sind weiterhin C₁-C₄-Alkoxy, z.B. Methoxy, Ethoxy, Propoxy, Isopropoxy, Eutoxy, Isobutoxy oder sec.-Butoxy.

Bevorzugte Reste R³, E¹, E² und Z⁶ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Chlorphenyl, 2,6-Dichlorphenyl, 2-, 3- oder 4-Nitrophenyl oder 2-, 3- oder 4-Carboxylphenyl.

Bevorzugte Reste Z³, Z⁴, Z⁶, E¹ und E² sind weiterhin z.B. Cyclopentyl, Cyclohexyl oder Cycloheptyl.

Bevorzugte Reste R³, Z³, Z⁴, E¹ und E² sind weiterhin z.B. Benzyl, 2-Methylbenzyl, 1- oder 2-Phenylethyl, 2-Hydroxyethyl, 2- oder 3-Hydroxypropyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl oder 2- oder 3-(2-Ethoxyethoxycarbonyloxy)propyl.

Bevorzugte Reste E¹ und E² sind weiterhin z.B. Pyridyl, 2-, 3- oder 4-Methylpyridyl, 2-, 3- oder 4-Methoxypyridyl, Formyl, Acetyl, Propionyl, Butyryl, Isobutyryl, Pentanoyl, Hexanoyl, Heptanoyl, Octanoyl, 2-Ethylhexanoyl, Methoxycarbonyl, Ethoxycarbonyl, Propoxycarbonyl, Isopropoxycarbonyl, Butoxycarbonyl, Isobutoxycarbonyl, sec-Butoxycarbonyl, Methylsulfonyl, Ethylsulfonyl, Propylsulfonyl, Isopropylsulfonyl, Butylsulfonyl, Cyclopentylsulfonyl, Cyclohexylsulfonyl, Cycloheptylsulfonyl, Phenylsulfonyl, Tolylsulfonyl, Pyridylsulfonyl, Benzoyl, 2-, 3- oder 4-Methylbenzoyl, 2-, 3- oder 4-Methoxybenzoyl, Thien-2-ylcarbonyl oder Thien-3-ylcarbonyl.

Bevorzugte Reste Z¹ sind z.B. Methylsulfonylamino, Ethylsulfonylamino, Propylsulfonylamino, Isopropylsulfonylamino, Butylsulfonylamino, Mono- oder Dimethylaminosulfonylamino, Mono- oder Diethylaminosulfonylamino, Mono- oder Dipropylaminosulfonylamino, Mono- oder Diisopropylaminosulfonylamino, Mono- oder Dibutylaminosulfonylamino oder (N-Methyl-N-ethylaminosulfonyl)amino.

Reste Z⁶ sind weiterhin z.B. Fluor, Chlor, Brom, Benzyl, 2-Methylbenzyl, 2,4-Dimethylbenzyl, 2-Methoxybenzyl, 2,4.Dimethoxybenzyl, Methylamino, Ethylamino, Propylamino, Isopropylamino, Butylamino, Pentylamino, Hexylamino, Heptylamino, Octylamino, 2-Ethylhexylamino, Methylthio, Ethylthio, Propylthio, Isopropylthio oder Butylthio.

Bevorzugte Reste Z³ und Z⁴ sind weiterhin z.B. Allyl oder Methallyl.

Bevorzugte Reste R² sind z.B. Methoxycarbonyl, Ethoxycarbonyl, Propoxycarbonyl, Isopropoxycarbonyl, Butoxycarbonyl, Pentyloxycarbonyl, Hexyloxycarbonyl, Formyl, Acetyl, Propionyl, Butyryl oder Isobutyryl.

Wenn E¹ und E² oder Z³ und Z⁴ jeweils zusammen mit dem sie verbindenden Stickstoffatom für einen 5- oder 6-gliedrigen gesättigten heterocyclischen Rest, der gegebenenfalls weitere Heteroatome, ausgewählt unter 0, N und S, aufweist, stehen, so können sie z.B. für Pyrrolidinyl, Piperidinyl, Morpholinyl, Piperazinyl oder N-(C₁-C₄-Alkyl)piperazinyl stehen.

Gemäß einer bevorzugten Ausführungsform steht X für CH.

Gemäß einer weiteren bevorzugten Ausführungsform steht R² für Cyano.

Gemäß einer weiteren bevorzugten Ausführungsform steht R³ für C₁-C₁₃-Alkyl, das durch 1, 2 oder 3 Sauerstoffatome unterbrochen sein kann und insbesondere für C₁-C₆-Alkyl, das durch 1 oder 2 Sauerstoffatome unterbrochen sein kann.

Gemäß einer besonders bevorzugten Ausführungsform handelt es sich bei den erfindungsgemäßen Farbstoffen um Methinfarbstoffe der Formel I, wobei
- R¹: für einen Rest der Formel IIa steht,;
- X: für CH steht,
- R²: für Cyano steht,
- R³: für C₁-C₁₃-Alkyl steht, das durch 1, 2 oder 3 Sauerstoffatome unterbrochen sein kann und insbesondere für C₁-C₆-Alkyl, das durch 1 oder 2 Sauerstoffatome unterbrochen sein kann,
steht.

Besonders bevorzugt sind Methinfarbstoffe der Formel I gemäß Tabelle I.1

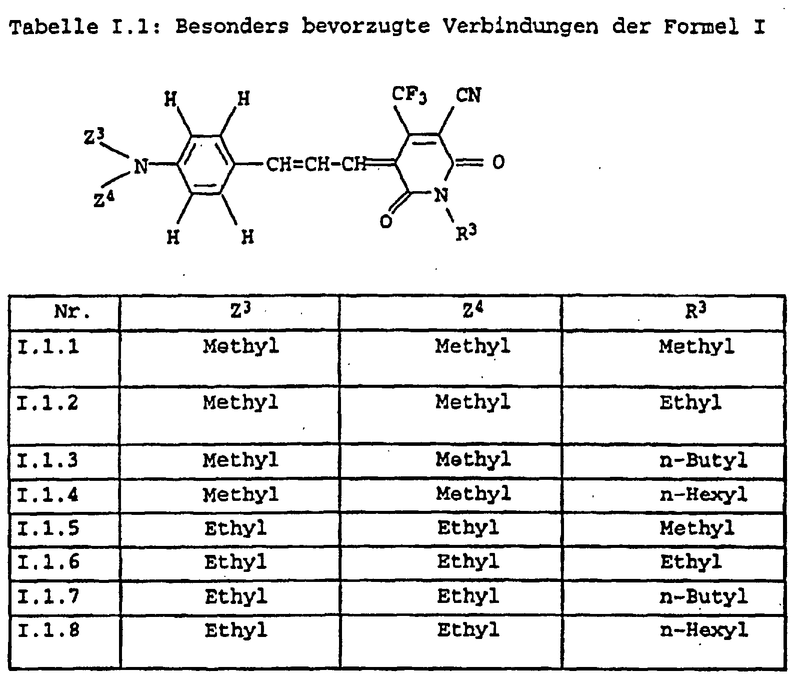

Gemäß einer weiteren besonders bevorzugten Ausführungsform handelt es sich bei den erfindungsgemäßen Farbstoffen um Methinfarbstoffe der Formel I, wobei
- R¹: für einen Rest der Formeln IIg, IIh oder insbesondere IIi steht,
- X: für CH steht,
- R²: für Cyano steht,
- R³: für C₁-C₁₃-Alkyl das durch 1, 2 oder 3 Sauerstoffatome unterbrochen sein kann und insbesondere für C₁-C₆-Alkyl, das durch 1 oder 2 Sauerstoffatome unterbrochen sein kann, steht,
- Z³ und Z⁴: gleich oder verschieden sein können und für Wasserstoff, Alkyl, das wie vorgenannt substituiert und durch 1, 2 oder 3 Sauerstoffatome unterbrochen sein kann, Alkenyl, Cycloalkyl, welches gegebenenfalls durch 1, 2, 3, oder 5 Alkylsubstituenten, die ihrerseits gegebenenfalls substituiert sind, substituiert sein kann, oder Aryl, bevorzugt Naphthyl und insbesondere Phenyl, welches wie vorgenannt substituiert sein kann,
stehen, und
- Z⁶: für Wasserstoff, Alkyl, Phenyl, welches durch 1, 2 oder 3 Alkylreste substituiert sein kann oder Cycloalkyl, welches gegebenenfalls durch 1, 2, 3, 4 oder 5 Alkylsubstituenten, die ihrerseits gegebenenfalls substituiert sind, substituiert sein kann.

Gemäß einer weiteren speziellen Ausführungsform handelt es sich bei den erfindungsgemäßen Farbstoffen um Methinfarbstoffe der Formel I gemäß Tabelle I.2

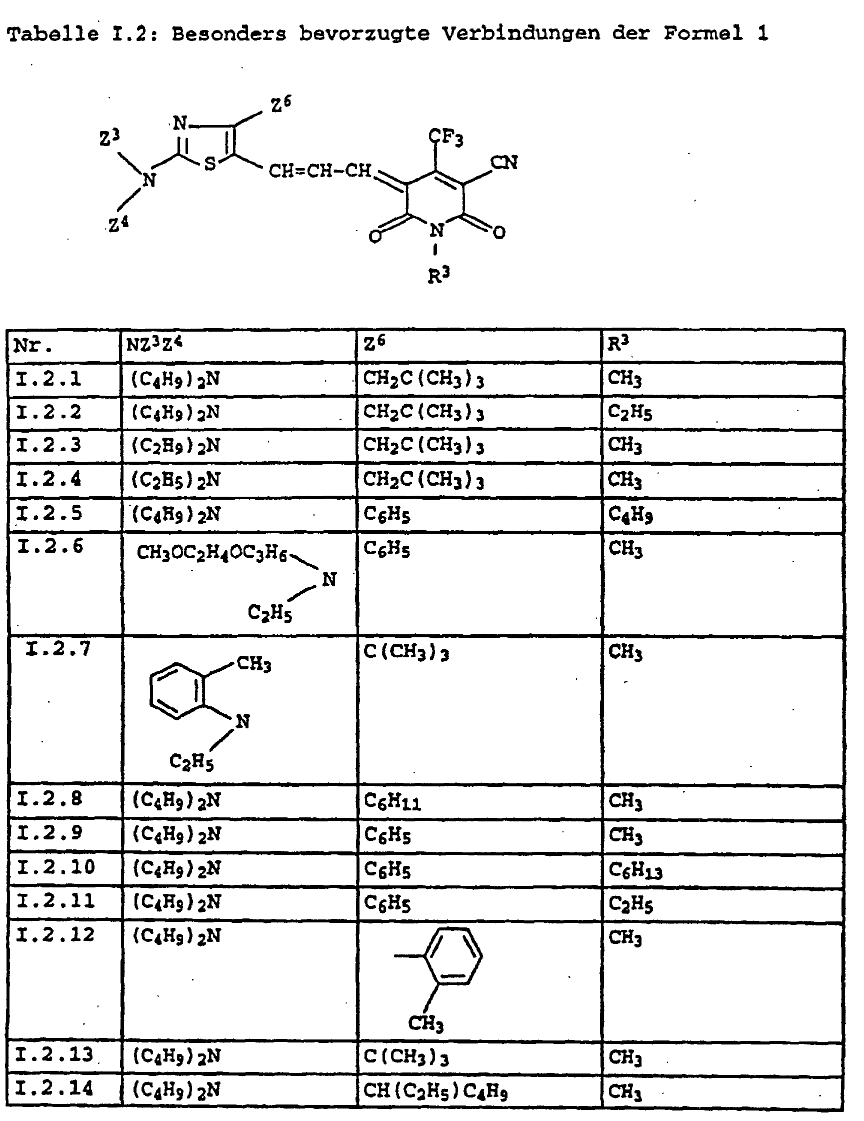

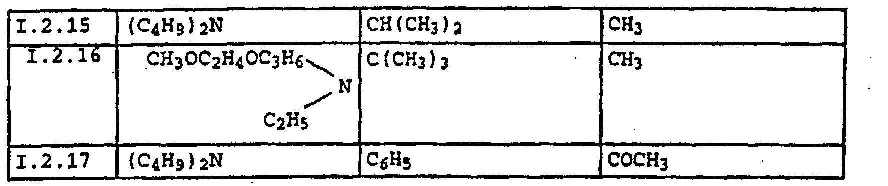

Die erfindungsgemäßen Methin- und Azamethinfarbstoffe der Formel I können nach dem Fachmann bekannten Methoden hergestellt werden.

So können z.B. die Farbstoffe der Formel I, bei denen X für CH steht, durch Kondensation von Aldehyden der Formel III

R¹-CH=CH-CHO (III)

mit Trifluormethylpyridonen der Formel IV 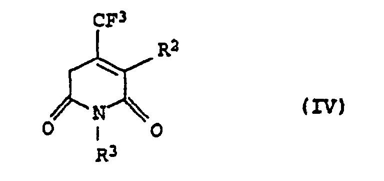 erhalten werden.

Diejenigen Farbstoffe der Formel I, für die X Stickstoff bedeutet, können z.B. durch oxidative Kupplung von Iminen der Formel V, die in einem tautomeren Gleichgewicht mit dem korrespondierenden Enamin vorliegen

R¹-CH₂-CH=NH (V)

mit den Trifluormethylpyridonen IV erhalten werden.

Ein weiterer Gegenstand der vorliegenden Erfindung ist ein Verfahren zur Übertragung von Farbstoffen von einem Träger auf ein mit Kunststoff beschichtetes Papier, vorzugsweise durch Diffusion oder Sublimation mit Hilfe einer Energiequelle, das dadurch gekennzeichnet ist, daß man einen Träger verwendet, auf dem sich ein oder mehrere Methin- oder Azamethinfarbstoffe der Formel I befinden.

Zur Herstellung der für das erfindungsgemäße Verfahren benötigten Farbstoffträger werden die Farbstoffe der Formel I in einem geeignete organischen Lösungsmittel oder in Mischungen von Lösungsmitteln mit einem oder mehreren Bindemitteln, gegebenenfalls unter Zugabe von Hilfsmitteln zu einer Druckfarbe verarbeitet. Diese enthält die Farbstoffe der Formel I vorzugsweise in molekular-dispers gelöster Form. Die Druckfarbe kann z.B. mittels einer Rakel auf den inerten Träger aufgetragen und die Färbung z.B. an der Luft oder mit einem Gebläse getrocknet werden. Geeignete organische Lösungsmittel für die Farbstoffe der Formel I sind z.B. solche, in denen die Löslichkeit der Farbstoffe der Formel I bei einer Temperatur von 20°C größer als 1 Gew.-%, vorzugsweise größer als 5 Gew.-% ist, wie z.B. Ethanol, Propanol, Isobutanol, Tetrahydrofuran, Methylenchlorid, Methylethylketon, Cyclopentanon, Cyclohexanon, Toluol, Chlorbenzol oder deren Mischungen.

Als Bindemittel können alle Harze oder Polymermaterialien verwendet werden, die in organischen Lösungsmitteln löslich sind und die die Farbstoffe an den inerten Träger abriebfest zu binden vermögen. Dabei werden solche Bindemittel bevorzugt, die die Farbstoffe nach Trocknung der Druckfarbe an der Luft in Form eines klaren, transparenten Films aufnehmen, ohne daß dabei eine sichtbare Auskristallisation der Farbstoffe auftritt.

Solche Bindemittel sind z.B. in der US-A-5 132 438 oder in den entsprechenden dort zitierten Patentanmeldungen genannt. Darüber hinaus können z.B. gesättigte lineare Polyester verwendet werden.

Bevorzugte Bindemittel sind Ethylcellulose, Ethylhydroxyethylcellulose, Polyvinylbutyral, Polyvinylacetat, Cellulosepropionat oder gesättigte lineare Polyester.

Das Gewichtsverhältnis von Bindemittel:Farbstoff beträgt im allgemeinen 1:1 bis 10:1.

Als Hilfsmittel können z.B. Trennmittel verwendet werden, wie sie in der US-A-5 132 438 oder den entsprechenden dort zitierten Patentanmeldungen genannt sind. Darüber hinaus können den erfindungsgemäßen Farbstoffen auch organische Additive zugesetzt werden, welche das Auskristallisieren der Transferfarbstoffe bei Lagerung oder beim Erhitzen des Farbbandes verhindern, wie z.B. Cholesterin oder Vanillin.

Geeignete inerte Träger sind z.B. in der US-A-5 132 438 oder in den entsprechenden dort zitierten Patentanmeldungen beschrieben. Die Dicke des Farbstoff-Trägers beträgt im allgemeinen 3 bis 30 µm.

Als Farbstoffnehmerschicht kommen im allgemeinen alle temperaturstabilen Kunststoffschichten mit Affinität zu den zu transferierenden Farbstoffen in Betracht, z.B. modifizierte Polycarbonate oder Polyester. Weitere Einzelheiten dazu können z.B. aus der US-A-5 132 438 oder den entsprechenden dort zitierten Patentanmeldungen entnommen werden.

Die Übertragung erfolgt mittels einer Energiequelle, z.B. mittels eines Lasers oder eines Thermokopfes, wobei letzterer auf eine Temperatur von ≥ 300°C aufheizbar sein muß, damit der Farbstofftransfer in einem Zeitbereich von 0 < t < 15 msec erfolgen kann. Dabei migriert der Farbstoff aus dem Transferblatt und diffundiert in die Oberflächenbeschichtung des Aufnahmemediums.

Die erfindungsgemäßen Farbstoffe der Formel I zeichnen sich beim Farbstofftransfer durch vorteilhafte anwendungstechnische Eigenschaften aus. Sie weisen eine hohe Löslichkeit im Farbband (gute Kompatibilität mit dem Bindemittel), eine hohe Stabilität in der Druckfarbe, eine gute Transferierbarkeit und eine hohe Bildstabilität (d.h. gute Lichtechtheit sowie gute Stabilität gegenüber Umwelteinflüssen, z.B. Feuchtigkeit, Temperatur oder Chemikalien) auf und erlauben eine flexible coloristische Anpassung an bereits vorgegebene subtraktive Grundfarben im Sinne einer optimalen Trichromie (höchstmögliche Brillanz von Grund- oder Mischfarben und tiefes neutrales Schwarz).

Es wurde weiterhin gefunden, daß man synthetische Materialien vorteilhaft färben oder bedrucken kann (auch mittels des Ink-Jet-Verfahrens), wenn man sie mit einem oder mehreren der erfindungsgemäßen Farbstoffe behandelt. Synthetische Materialien sind z.B. Polyester, Polyamide oder Polycarbonate. Insbesondere zu nennen sind Materialien in textiler Form, wie Fasern, Garne, Zwirne, Maschenware, Webware oder Non-wovens aus Polyester, modifiziertem Polyester, z.B. anionisch modifiziertem Polyester, Mischgewebe von Polyester mit Cellulose, Baumwolle, Viskose oder Wolle, oder Polyamid. Die Färbe- und Druckbedingungen sind dem Fachmann bekannt und schließen auch das Färben in überkritischem Kohlendioxid ein. Man erhält Färbungen oder Drucke mit hoher Lichtechtheit, hoher Brillanz und sehr guten Naßechtheiten, z.B. sehr guter Wasch- oder Schweißechtheit.

Die erfindungsgemäßen Farbstoffe können auch zum Färben von keratinischen Fasern, z.B. bei der Haarfärbung oder der Färbung von Pelzen verwendet werden.

Die neuen Farbstoffe der Formel I eignen sich weiterhin vorteilhaft für die Herstellung von Farbfiltern, wie sie z.B. in der EP-A-399 473 beschrieben sind.

Schließlich können sie auch vorteilhaft als Farbmittel für die Herstellung von Tonern für die Elektrophotographie verwendet werden.

Die folgenden nicht einschränkenden Beispiele sollen die Erfindung näher erläutern.

### A) Herstellung

### Beispiel 1:

11,8 g (0,1 mol) p-N,N-Diethylaminozimtaldehyd und 28,8 g (0,1 mol) 3-Cyano-1-n-hexyl-6-hydroxy-4-trifluormethyl-1-H-pyridin-2-on werden bei Raumtemperatur in 50 ml Acetanhydrid suspendiert und anschliessend eine Stunde auf 80°C erhitzt. Nach dem Abkühlen auf Raumtemperatur wird der ausgefallene Niederschlag abgesaugt, mit 10 ml eiskaltem Methanol gewaschen und im Vakuum bei 50°C getrocknet. Man erhält 30,5 g (75 % der Theorie) einer blauen Verbindung der Formel 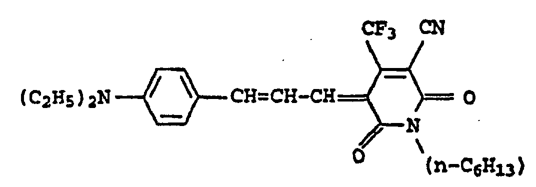 λₘₐₓ (in CH₂Cl₂): 660 nm

In analoger Weise werden die in der Tabelle 1 aufgeführten Farbstoffe erhalten.

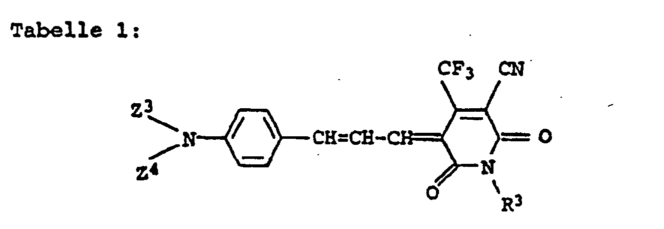

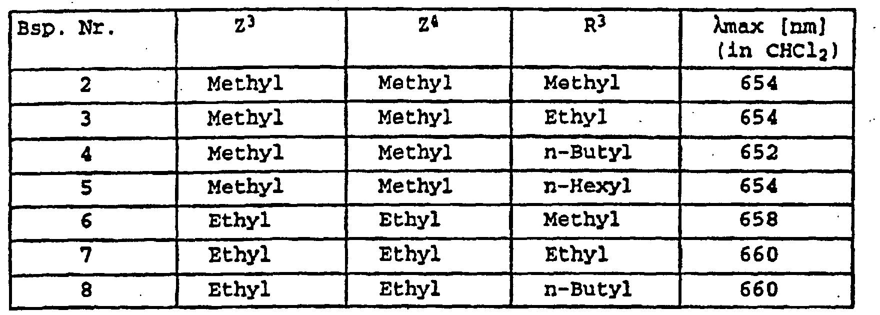

### Beispiel 9:

a) In 150 ml Aceton werden 128 g Kaliumthiocyanat vorgelegt und bei 20° bis 25°C mit 185 ml 3,3-Dimethylbuttersäurechlorid versetzt. Man rührt 8 Stunden bei Raumtemperatur und tropft anschliessend 234 ml Dibutylamin zu. Nach 4 Stunden werden 120 g Eis und 142 ml 50 gew.-%ige Natronlauge zugesetzt, wobei die Temperatur bei max. 40°C gehalten wird. Nun gibt man eine Lösung von 132 g Chloressigsäure in 120 ml Wasser zu und erhitzt 8 h auf 80°C. Anschließend wird bei 60°C eine Phasentrennung durchgeführt. Die organische Phase wird mit Methylenchlorid verdünnt, mehrfach mit verdünnter Salzsäure und anschließend mit Wasser ausgeschüttelt. Nach Trocknen über Natriumsulfat wird das Lösungsmittel am Rotationsverdampfer abdestilliert. Man erhält 311 g eines dunklen Öls, das 69,5 % (GC) der Verbindung der Formel 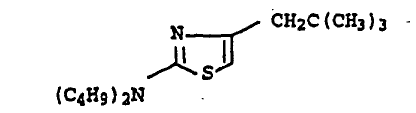 enthält.
b) Zu einer bei 0° bis 5°C hergestellten Lösung von 38,5 g N,N-Dimethylaminoacrolein und 60 g Phosphoroxidtrichlorid in 100 ml Dichlormethan wurde unter Eiskühlung eine Lösung von 105 g 2-Dibutylamino-4-(2,2-dimethylpropyl)thiazol (Stufe a)) in 100 ml Dichlormethan zugetropft. Nach zwei Stunden Rühren bei 20°C wird die Lösung auf Eis/Wasser gegeben, über Nacht gerührt, die Phasen separiert und anschließend die wäßrige Phase mit Essigester extrahiert. Die vereinigten organischen Phasen werden über Natriumsulfat getrocknet und das Lösungsmittel dann am Rotationsverdampfer abdestilliert. Man erhält 95 g der Verbindung der Formel 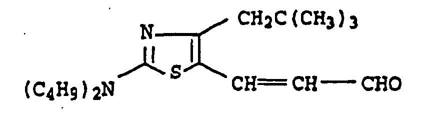 Eine synthetische Alternative zur Darstellung analoger α,β-ungesättigter Aldehyde ist die Aldolkondensation von Thiazolaldehyden der Formel 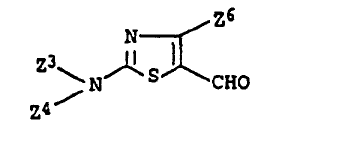 die ebenfalls durch Vilsmeyer-Synthese aus den Thiazolen der Stufe a) erhalten werden können, mit Acetaldehyd als Methylenkomponente, nach Verfahren, die dem Fachmann bekannt sind.
c) 6,54 g 3-Cyano-6-hydroxy-1-methyl-4-trifluormethyl-1-H-pyridin-2-on und 9,72 g 2-Dibutylamino-4-(2,2-dimethylpropyl)-5-acroleylthiazol (Stufe b) werden bei Raumtemperatur in 25 ml Essigsäureanhydrid suspendiert und anschließend 1 h auf 80°C erhitzt. Der beim Abkühlen ausgefallene Niederschlag wird abgesaugt, mit Wasser und Methanol gewaschen und aus Essigester umkristallisiert. Man erhält 13 g einer blauen kristallinen Verbindung der Formel

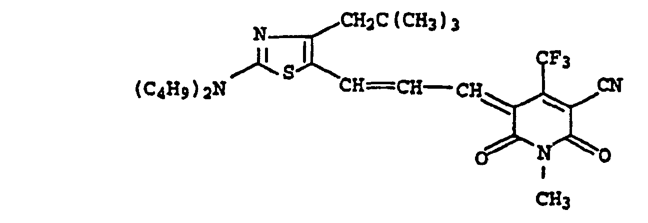

In analoger Weise werden die in der folgenden Tabelle 2 aufgeführten Farbstoffe erhalten.

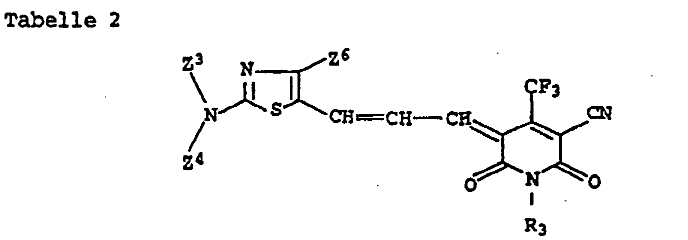

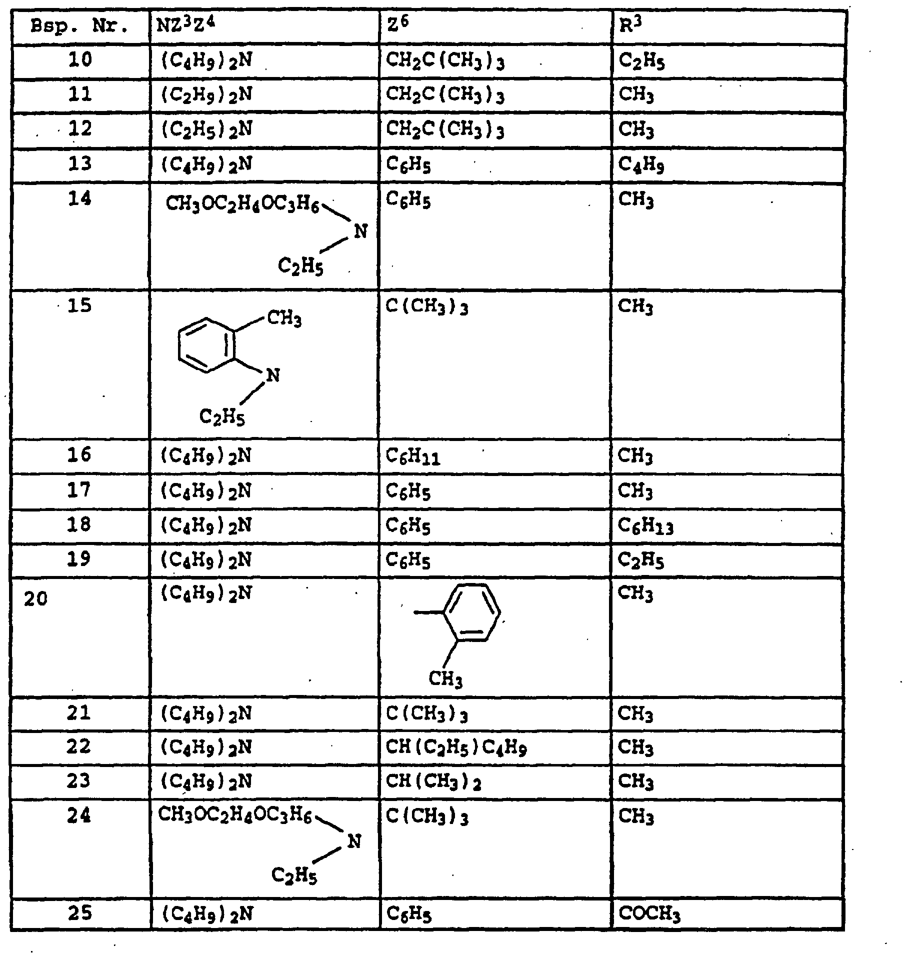

### B) Färbevorschrift

Polyestergewebe wird bei 55°C in ein Färbebad eingebracht, das 0,2. bis 1,0 Gew.-% (nach Tabelle 3) Farbstoff (bezogen auf das Gewicht des Gewebes), 1 g/l des Natriumsalzes eines Kondensationsproduktes aus Naphthalin-2-sulfonsäure und Formaldehyd und 0,5 ml/l Pufferlösung (pH 4,5) enthält. Das Bad wird dann innerhalb von 30 Min auf 130°C erhitzt und noch 60 min bei dieser Temperatur gehalten.

Nach dem Abkühlen und Spülen wird das Gewebe in einem Bad, das 4 g/l 32 gew.-%ige Natriumdithionit und 1 g/l eines Anlagerunsproduktes von 12 mol Ethylenoxid an 1 mol Oleylamin enthält, 30 min bei 70°C reduktiv gereinigt und anschließend gespült und getrocknet.

Mit den Farbstoffen der Beispiele 1 bis 8 wurden hochlichtechte brillante blaue Färbungen erhalten, die sehr gute Naßechtheiten, z.B. eine sehr gut Wasch- und Schweißechtheit aufweisen.

**Tabelle 3:**

| Bsp. Nr. | Prozentgehalt Farbstoff X [%] |
|---|---|
| 1 | 0,25 |
| 2 | 0,60 |
| 3 | 0,50 |
| 4 | 0,275 |
| 5 | 0,40 |
| 6 | 0,425 |
| 7 | 0,30 |
| 8 | 0,30 |

## Patentansprüche

1. Methin- oder Azamethinfarbstoffe der Formel I 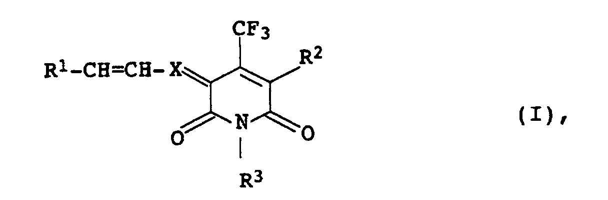 worin
X für Stickstoff oder CH steht,
R¹ für einen Rest der Formeln 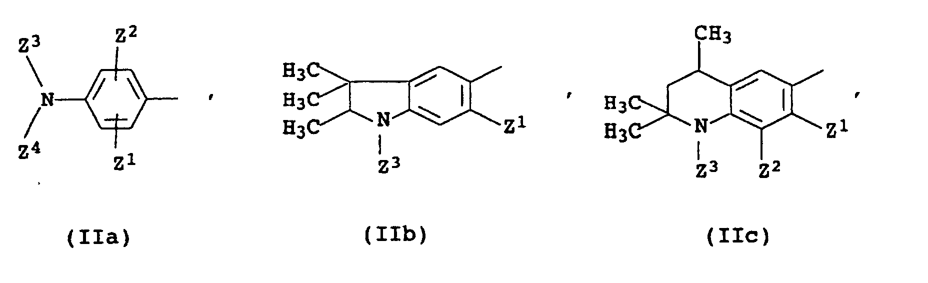 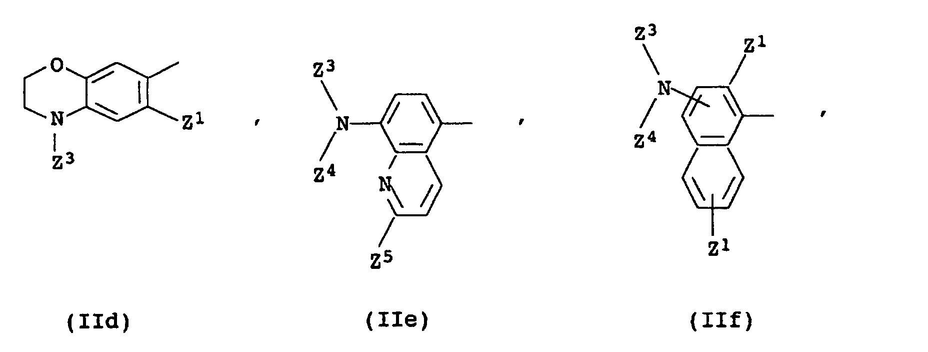 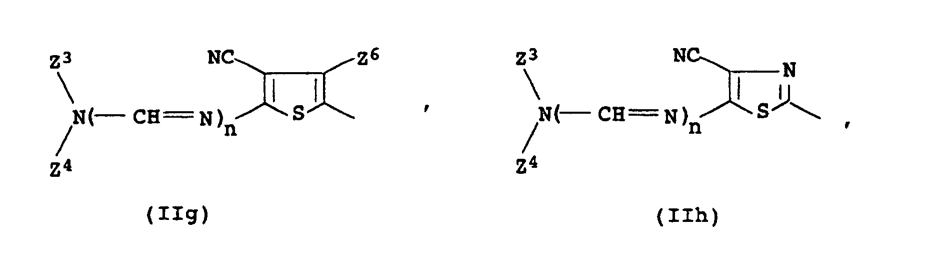 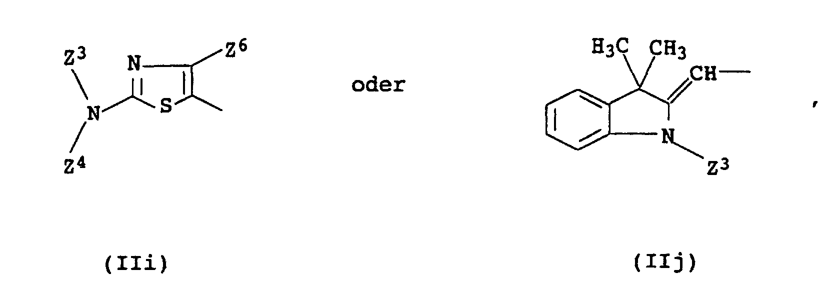 steht, worin
n für 0 oder 1 steht,
Z¹ für Wasserstoff, Alkyl, das durch 1, 2 oder 3 Sauerstoffatome unterbrochen sein kann, Hydroxy, Alkoxy, Alkylsulfonylamino, Mono- oder Dialkylaminosulfonylamino oder den Rest -NHCOZ⁷ oder -NHCO₂Z⁷ steht, worin Z⁷ für Phenyl, Benzyl, Tolyl oder Alkyl, das durch 1, 2 oder 3 Sauerstoffatome unterbrochen sein kann, steht, und
Z² für Wasserstoff, Alkyl oder Alkoxy steht;
Z³ und Z⁴ gleich oder verschieden sein können und die in Anspruch 1 für E¹ bzw. E² angegebenen Bedeutungen besitzen oder für Alkenyl stehen, oder
Z³ und Z⁴ zusammen mit dem Stickstoffatom, an das sie gebunden sind, für einen 5- bis 6-gliedrigen gesättigten heterocyclischen Rest, der ein oder zwei weitere Heteroatome, ausgewählt unter O, N und S, enthalten kann, stehen
Z⁵ für Wasserstoff oder Alkyl steht; und
Z⁶ für Wasserstoff, Halogen, Alkyl, Phenyl, Phenylalkyl, Cycloalkyl, Thienyl, Hydroxy, Alkoxy, Alkylthio oder Monoalkylamino steht, wobei die beiden Phenylreste einen, zwei oder drei der folgenden Substituenten: Alkyl, Alkoxy, Halogen, Nitro oder Carboxyl tragen können,
R² für Cyano, Carbamoyl, Carboxy, Alkoxycarbonyl oder Alkanoyl
steht, und
R³ für Alkyl, welches durch eine, zwei oder drei der folgenden Gruppen: Alkanoyloxy, Alkylaminocarbonyloxy, Alkoxycarbonyl, Alkoxycarbonyloxy, wobei die Alkylgruppe der drei letztgenannten Reste durch 1, 2 oder 3 Sauerstoffatome unterbrochen sein und durch Phenyl oder Phenoxy substituiert sein kann, Cycloalkyl, welches 1, 2, 3, 4 oder 5 Alkylgruppen tragen kann, Aryl, welches einen, zwei oder drei Substituenten, die unter Alkyl, Alkoxy, Halogen, Nitro oder Carboxyl ausgewählt sind, tragen kann,
Cycloalkyloxy, Phenoxy, Halogen, Alkoxy, Hydroxy oder Cyano substituiert und/oder durch 1, 2 oder 3 Sauerstoffatome unterbrochen sein kann,
Cycloalkyl, welches durch 1, 2, 3, 4 oder 5 Alkylsubstituenten substituiert sein kann,
Aryl, welches einen, zwei oder drei der folgenden Substituenten: Alkyl, Alkoxy, Halogen, Nitro oder Carboxyl tragen kann
oder einen Rest der Formel NE¹E² steht, worin E¹ und E² gleich oder verschieden sein können und die für R³ angegebenen Bedeutungen besitzen können (ausgenommen NE¹E²) oder für Pyridyl, welches einen, zwei oder drei der folgenden Substituenten: Alkyl, Alkoxy, Halogen, Nitro oder Carboxyl tragen kann, Alkanoyl, Alkoxycarbonyl, Alkylsulfonyl, Cycloalkylsulfonyl, Phenylsulfonyl, welches gegebenenfalls substituiert sein kann, Pyridylsulfonyl, welches gegebenenfalls substituiert sein kann, Benzoyl, welches gegebenenfalls substituiert sein kann, Pyridylcarbonyl, oder Thienylcarbonyl stehen,
oder
E¹ und E² zusammen mit dem Stickstoff, an das sie gebunden sind, für Succinimido, welches einen oder zwei Alkylsubstituenten tragen kann, Phthalimido, welches einen oder zwei C₁-C₄-Alkylsubstituenten tragen kann, oder einen 5- bis 6-gliedrigen gesättigten heterocyclischen Rest, der gegebenenfalls durch eine oder mehrere Alkylgruppen substituiert sein und/oder 1 oder 2 weitere Heteroatome, ausgewählt unter O, N und S, aufweisen kann, stehen,
und die Salze davon.

2. Methinfarbstoffe nach Anspruch 1, wobei in der Formel I
X für CH steht.

3. Methin- oder Azamethinfarbstoffe nach einem der vorhergehenden Ansprüche, wobei in der Formel I R² für Cyano steht.

4. Methin- oder Azamethinfarbstoffe nach einem der vorhergehenden Ansprüche, worin R³ für Alkyl, das durch Cycloalkyl, Aryl, Alkoxy, Halogen, Nitro oder Carboxyl substituiert und/oder durch 1, 2, oder 3 Sauerstoffatome unterbrochen sein kann, oder für NE¹E² steht.

5. Methinfarbstoffe nach einem der vorhergehenden Ansprüche, wobei R¹ für einen Rest der Formel IIa steht.

6. Methinfarbstoffe nach Anspruch 5, wobei in der Formel IIa
Z¹ und Z² unabhängig voneinander für Wasserstoff, Alkyl, das durch 1, 2 oder 3 Sauerstoffatome unterbrochen sein kann, oder Alkoxy stehen;
Z³ und Z⁴ unabhängig voneinander für Wasserstoff, Alkyl, das durch Cycloalkyl, Aryl, Halogen, Nitro oder Carboxyl substituiert und durch 1, 2 oder 3 Sauerstoffatome unterbrochen sein kann, oder Cycloalkyl stehen, welches gegebenenfalls durch 1, 2 oder 3 Alkylsubstituenten substituiert sein kann,
R³ für Alkyl, das durch 1, 2 oder 3 Sauerstoffatome unterbrochen sein kann,
steht.

7. Methinfarbstoffe nach Anspruch 2, wobei es sich bei der Verbindung der Formel I um eine Verbindung aus der folgenden Tabelle handelt: 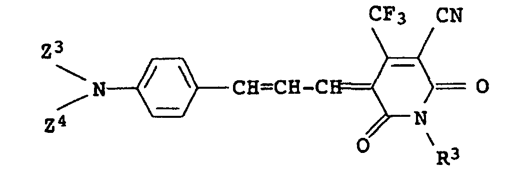
| Z³ | Z⁴ | R³ |
|---|---|---|
| Methyl | Methyl | Methyl |
| Methyl | Methyl | Ethyl |
| Methyl | Methyl | n-Butyl |
| Methyl | Methyl | n-Hexyl |
| Ethyl | Ethyl | Methyl |
| Ethyl | Ethyl | Ethyl |
| Ethyl | Ethyl | n-Butyl |
| Ethyl | Ethyl | n-Hexyl |

8. Verfahren zur Übertragung von Farbstoffen von einem Träger auf ein mit Kunststoff beschichtetes Papier, **dadurch gekennzeichnet, daß** man einen Träger verwendet, auf dem sich ein oder mehrere Methin- und/oder Azamethinfarbstoffe gemäß einem der Ansprüche 1 bis 7 befinden.

9. Verfahren zum Färben oder Bedrucken von synthetischen Materialien, **dadurch gekennzeichnet, daß** man die synthetischen Materialien mit einem oder mehreren Methin- und/oder Azamethinfarbstoffen gemäß einem der Ansprüche 1 bis 7 behandelt.

10. Färbemittel, enthaltend wenigstens einen Methin- oder Azamethinfarbstoff gemäß einem der Ansprüche 1 bis 7.

11. Verwendung eines Methin- oder Azamethinfarbstoffes gemäß einem der Ansprüche 1 bis 7 für die Übertragung von Farbstoffen von einem Träger auf ein mit Kunststoff beschichtetes Papier.

12. Verwendung eines Methin- oder Azamethinfarbstoffes gemäß einem der Ansprüche 1 bis 7 zum Färben oder Bedrucken von synthetischen Materialien.

13. Verfahren zur Herstellung der Verbindungen nach Anspruch 1, **dadurch gekennzeichnet, daß** man zur Herstellung der Verbindungen der Formel I, worin X für CH steht, einen Aldehyd der Formel III
R¹―CH=CH―CHO (III)
mit einem Trifluormethylpyridon der Formel IV 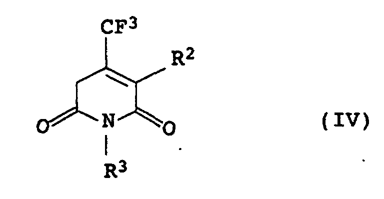 umsetzt oder
zur Herstellung der Verbindungen der Formel I, worin X für N steht, eine Verbindung der Formel V:
R¹―CH₂―CH=NH (V)
mit einem Trifluormethylpyridon der Formel IV umsetzt, wobei R¹, R² und R³ die in einem der Ansprüche 1 bis 7 angegebenen Bedeutungen besitzt.

14. Methinfarbstoff der Formel 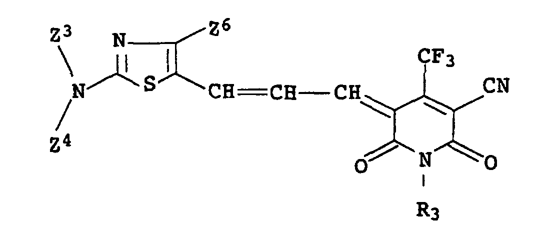 worin
Z³ und Z⁴ für C₄H₉ stehen,
Z⁶ für C₆H₅ steht, und
R³ für COCH₃ steht.

## Claims

1. Methine or azamethine dyes of the formula I 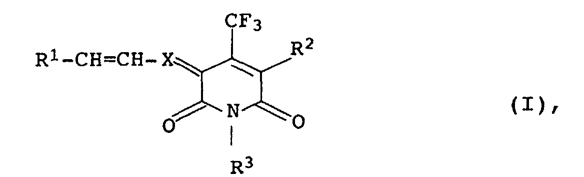 where
X is nitrogen or CH,
R¹ is a radical of the formula 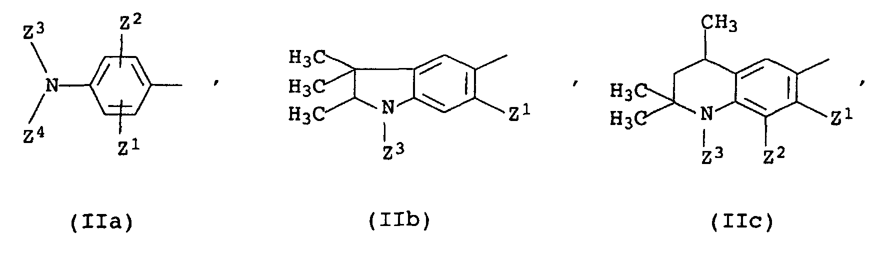 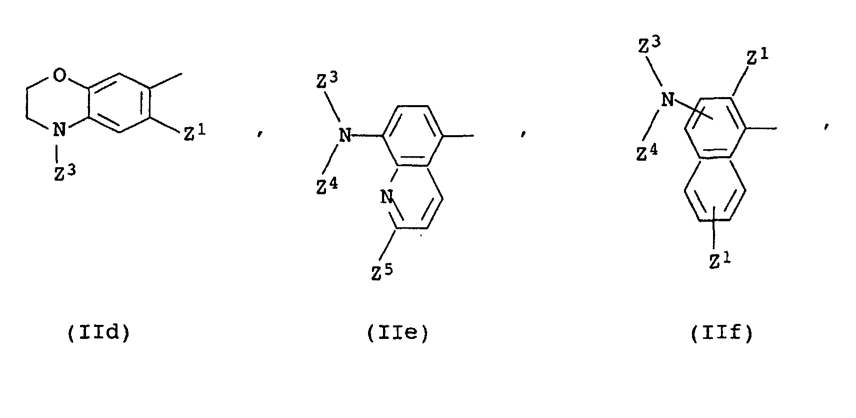 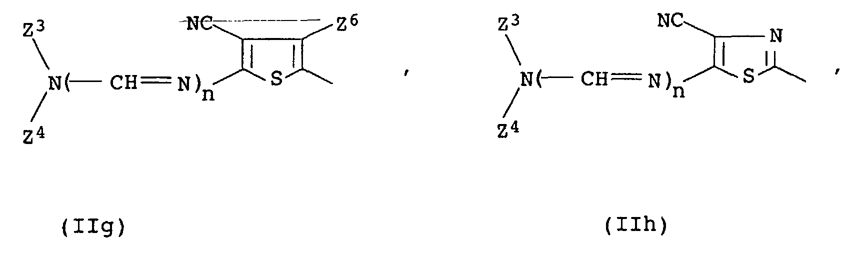 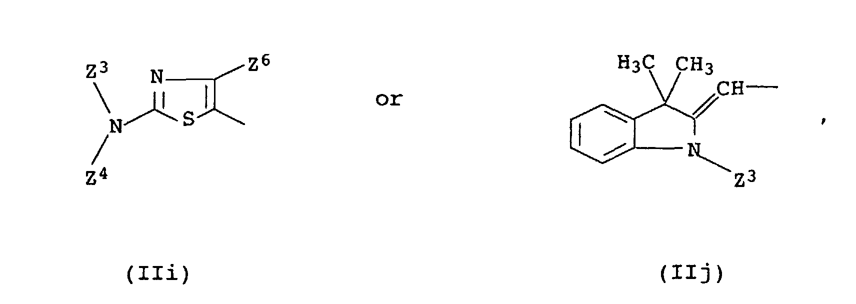
where
n is 0 or 1,
Z¹ is hydrogen, alkyl, uninterrupted or interrupted by 1, 2 or 3 oxygen atoms, hydroxyl, alkoxy, alkylsulfonylamino, mono- or dialkylaminosulfonylamino or -NHCOZ⁷ or -NHCO₂Z⁷, where Z⁷ is phenyl, benzyl, tolyl or alkyl, uninterrupted or interrupted by 1, 2 or 3 oxygen atoms, and
Z² is hydrogen, alkyl or alkoxy;
Z³ and Z⁴ are identical or different and each have the meanings specified for E¹ and E² in claim 1 or are alkenyl, or
Z³ and Z⁴ plus the nitrogen atom to which they are attached are a 5- or 6-membered saturated heterocyclic radical with or without one or two further hetero atoms selected from the group consisting of oxygen, nitrogen and sulfur,
Z⁵ is hydrogen or alkyl; and
Z⁶ is hydrogen, halogen, alkyl, phenyl, phenylalkyl, cycloalkyl, thienyl, hydroxyl, alkoxy, alkylthio or monoalkylamino, the two phenyl radicals being unsubstituted or bearing one, two or three substituents selected from the group consisting of alkyl, alkoxy, halogen, nitro and carboxyl,
R² is cyano, carbamoyl, carboxyl, alkoxycarbonyl or alkanoyl,
and
R³ is alkyl, unsubstituted or substituted by one, two or three of the following groups: alkanoyloxy, alkylaminocarbonyloxy, alkoxycarbonyl, alkoxycarbonyloxy, the alkyl group in the three lastmentioned radicals being uninterrupted or interrupted by 1, 2 or 3 oxygen atoms and unsubstituted or phenyl- or phenoxy-substituted, cycloalkyl, unsubstituted or bearing 1, 2, 3, 4 or 5 alkyl groups, aryl, unsubstituted or bearing one, two or three substituents selected from the group consisting of alkyl, alkoxy, halogen, nitro and carboxyl, cycloalkyloxy, phenoxy, halogen, alkoxy, hydroxyl or cyano and/or uninterrupted or interrupted by 1, 2 or 3 oxygen atoms,
cycloalkyl, unsubstituted or substituted by 1, 2, 3, 4 or 5 alkyl substituents,
aryl, unsubstituted or bearing one, two or three substituents selected from the group consisting of alkyl, alkoxy, halogen, nitro and carboxyl,
or a radical of the formula NE¹E², where E¹ and E² are identical or different and each have the meanings specified for R³ other than NE¹E² or are pyridyl, unsubstituted or bearing one, two or three substituents selected from the group consisting of alkyl, alkoxy, halogen, nitro and carboxyl, alkanoyl, alkoxycarbonyl, alkylsulfonyl, cycloalkylsulfonyl, phenylsulfonyl, substituted or unsubstituted, pyridylsulfonyl, substituted or unsubstituted, benzoyl, substituted or unsubstituted, pyridylcarbonyl or thienylcarbonyl,
or
E¹ and E² plus the nitrogen to which they are attached are succinimido, unsubstituted or bearing one or two alkyl substituents, phthalimido, unsubstituted or bearing one or two C₁-C₄-alkyl substituents, or a 5- or
6-membered saturated heterocyclic radical with or without one or more alkyl substituents and/or 1 or 2 further hetero atoms selected from the group consisting of oxygen, nitrogen and sulfur,
and the salts thereof.

2. Methine dyes as claimed in claim 1, wherein, in the formula I,
X is CH.

3. Methine or azamethine dyes as claimed in any of the preceding claims, wherein, in the formula I, R² is cyano.

4. Methine or azamethine dyes as claimed in any of the preceding claims, wherein R³ is alkyl, unsubstituted or substituted by cycloalkyl, aryl, alkoxy, halogen, nitro or carboxyl and/or uninterrupted or interrupted by 1, 2 or 3 oxygen atoms, or is NE¹E².

5. Methine dyes as claimed in any of the preceding claims, wherein R¹ is a radical of the formula IIa.

6. Methine dyes as claimed in claim 5, wherein, in the formula IIa,
Z¹ and Z² are independently of each other hydrogen, alkyl, uninterrupted or interrupted by 1, 2 or 3 oxygen atoms, or alkoxy;
Z³ and Z⁴ are independently of each other hydrogen, alkyl, unsubstituted or substituted by cycloalkyl, aryl, halogen, nitro or carboxyl and uninterrupted or interrupted by 1, 2 or 3 oxygen atoms, or cycloalkyl, unsubstituted or substituted by 1, 2 or 3 alkyl substituents,
R³ is alkyl with or without interruption by 1, 2 or 3 oxygen atoms.

7. Methine dyes as claimed in claim 2, comprising a compound of the formula I conforming to the following table: 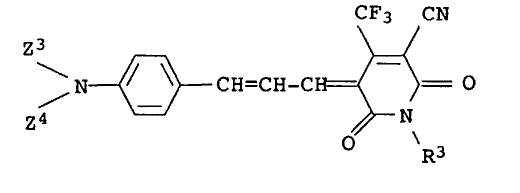
| Z³ | Z⁴ | R³ |
|---|---|---|
| methyl | methyl | methyl |
| methyl | methyl | ethyl |
| methyl | methyl | n-butyl |
| methyl | methyl | n-hexyl |
| ethyl | ethyl | methyl |
| ethyl | ethyl | ethyl |
| ethyl | ethyl | n-butyl |
| ethyl | ethyl | n-hexyl |

8. A process for transferring dyes from a transfer to a polymer-coated paper, which comprises using a transfer comprising one or more methine or azamethine dyes as claimed in any of claims 1 to 7.

9. A process for dyeing or printing synthetic materials, which comprises treating the synthetic materials with one or more methine or azamethine dyes as claimed in any of claims 1 to 7.

10. Colorants comprising at least one methine or azamethine dye as claimed in any of claims 1 to 7.

11. The use of a methine or azamethine dye as claimed in any of claims 1 to 7 for the transfer of dyes from a transfer to a polymer-coated paper.

12. The use of a methine or azamethine dye as claimed in any of claims 1 to 7 for dyeing or printing synthetic materials.

13. A process for preparing the compounds of claim 1, which comprises reacting an aldehyde of the formula III
R¹―CH=CH―CHO (III)
with a trifluoromethylpyridone of the formula IV 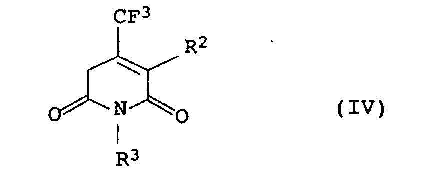 to prepare compounds of the formula I where X is CH, or reacting a compound of the formula V
R¹―CH₂―CH=NH (V)
with a trifluoromethylpyridone of the formula IV, where R¹, R² and R³ are each as defined in any of claims 1 to 7, to prepare the compounds of the formula I where X is nitrogen.

14. Methine dye of the formula 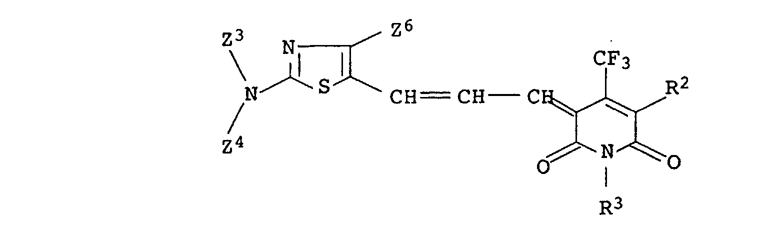 where
Z³ and Z⁴ each are C₄H₉,
Z⁶ is C₆H₅, and
R³ is COCH₃.

## Revendications

1. Colorants méthine ou azaméthine de formule I 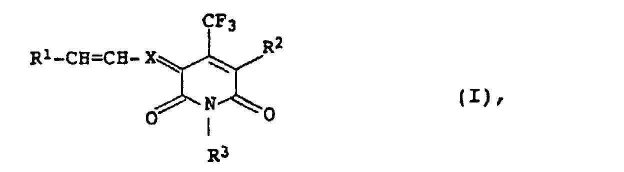 dans laquelle
X représente un azote ou CH,
R¹ représente un radical de formule 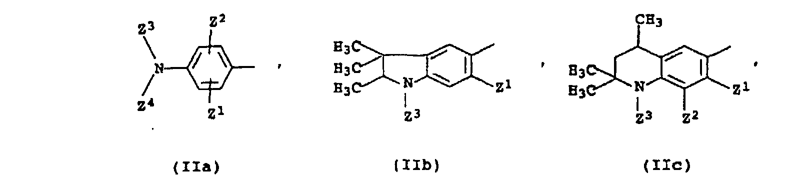 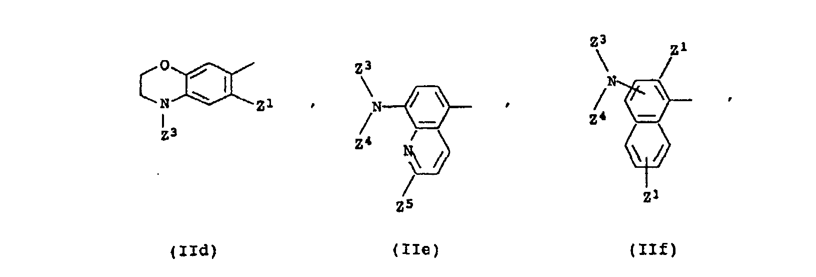 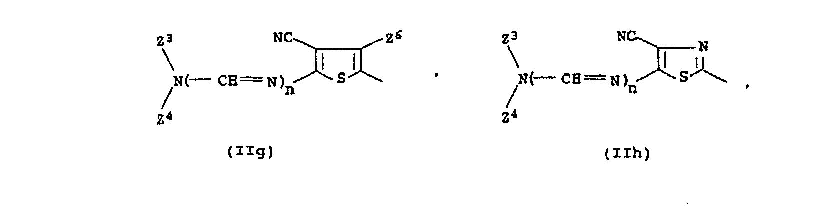 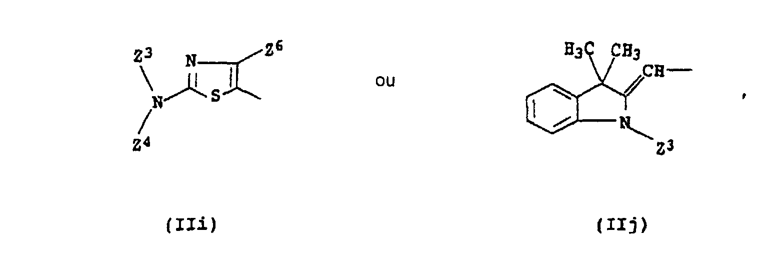 dans lesquelles
n vaut 0 ou 1,
Z¹ représente un hydrogène, un alkyle qui peut être interrompu par 1, 2 ou 3 atomes d'oxygène, un hydroxy, un alcoxy, un alkylsulfonylamino, un mono- ou dialkylaminosulfonylamino ou le radical -NHCOZ⁷ ou -NHCO₂Z⁷, où Z⁷ représente un phényle, un benzyle, un tolyle ou un alkyle qui peut être interrompu par 1, 2 ou 3 atomes d'oxygène, et
Z² représente un hydrogène, un alkyle ou un alcoxy ;
Z³ et Z⁴ peuvent être identiques ou différents et ont les significations indiquées dans la revendication 1 pour E¹ ou E², respectivement, ou représentent un alcényle, ou
Z³ et Z⁴ représentent, conjointement avec l'atome d'azote auquel ils sont liés, un radical hétérocyclique saturé à 5 à 6 chaînons, qui peut renfermer un ou deux autres hétéroatomes choisis parmi O, N et S,
Z⁵ représente un hydrogène ou un alkyle ; et
Z⁶ représente un hydrogène, un halogène, un alkyle, un phényle, un phénylalkyle, un cycloalkyle, un thiényle, un hydroxy, un alcoxy, un alkylthio ou un monoalkylamino, où les deux radicaux phényle peuvent porter un, deux ou trois des substituants suivants : un alkyle, un alcoxy, un halogène, un nitro ou un carboxy,
R² représente un cyano, un carbamoyle, un carboxy, un alcoxycarbonyle ou un alcanoyle, et
R³ représente un alkyle qui peut être substitué par un, deux ou trois des groupes suivants : un alcanoyloxy, un alkylaminocarbonyloxy, un alcoxycarbonyle, un alcoxycarbonyloxy, où le groupe alkyle des trois radicaux mentionnés en dernier peut être interrompu par 1, 2 ou 3 atomes d'oxygène et peut être substitué par un phényle ou un phénoxy, un cycloalkyle qui peut porter 1, 2, 3, 4 ou 5 groupes alkyle, un aryle qui peut porter un, deux ou trois substituants qui sont choisis parmi un alkyle, un alcoxy, un halogène, un nitro ou un carboxy,
un cycloalkyloxy, un phénoxy, un halogène, un alcoxy, un hydroxy ou un cyano et/ou peut être interrompu par 1, 2 ou 3 atomes d'oxygène,
un cycloalkyle qui peut être substitué par 1, 2, 3, 4 ou 5 substituants alkyle,
un aryle qui peut porter un, deux ou trois des substituants suivants : un alkyle, un alcoxy, un halogène, un nitro ou un carboxy,
ou un radical de formule NE¹E², dans laquelle E¹ et E² peuvent être identiques ou différents et ont les significations indiquées pour R³ (à l'exception de NE¹E²), ou représentent un pyridyle qui peut porter un, deux ou trois des substituants suivants : un alkyle, un alcoxy, un halogène, un nitro ou un carboxy, un alcanoyle, un alcoxycarbonyle, un alkylsulfonyle, un cycloalkylsulfonyle, un phénylsulfonyle qui peut être éventuellement substitué, un pyridylsulfonyle qui peut être éventuellement substitué, un benzoyle qui peut être éventuellement substitué, un pyridylcarbonyle ou un thiénylcarbonyle,
ou
E¹ et E² représentent, conjointement avec l'azote auquel ils sont liés, un succinimido qui peut porter un ou deux substituants alkyle, un phtalimido qui peut porter un ou deux substituants alkyle en C₁-C₄, ou un radical hétérocyclique saturé à 5 à 6 chaînons, qui est éventuellement substitué par un ou plusieurs groupes alkyle et/ou peut renfermer 1 ou 2 autres hétéroatomes choisis parmi O, N et S,
et leurs sels.

2. Colorants méthine selon la revendication 1, dans lesquels dans la formule I, X représente CH.

3. Colorants méthine ou azaméthine selon l'une quelconque des revendications précédentes, dans lesquels dans la formule I, R² représente un cyano.

4. Colorants méthine ou azaméthine selon l'une quelconque des revendications précédentes, dans lesquels R³ représente un alkyle qui peut être substitué par un cycloalkyle, un aryle, un alcoxy, un halogène, un nitro ou un carboxy et/ou peut être interrompu par 1, 2 ou 3 atomes d'oxygène, ou représente NE¹E².

5. Colorants méthine selon l'une quelconque des revendications précédentes, dans lesquels R¹ représente un radical de formule IIa.

6. Colorants méthine selon la revendication 5, dans lesquels dans la formule IIa,
Z¹ et Z² représentent, indépendamment l'un de l'autre, un hydrogène, un alkyle qui peut être interrompu par 1, 2 ou 3 atomes d'oxygène, ou un alcoxy ;
Z³ et Z⁴ représentent, indépendamment l'un de l'autre, un hydrogène, un alkyle qui peut être substitué par un cycloalkyle, un aryle, un halogène, un nitro ou un carboxy et peut être interrompu par 1, 2 ou 3 atomes d'oxygène, ou un cycloalkyle qui peut être éventuellement substitué par 1, 2 ou 3 substituants alkyle,
R³ représente un alkyle qui peut être interrompu par 1, 2 ou 3 atomes d'oxygène.

7. Colorants méthine selon la revendication 2, dans lesquels le composé de formule I est un composé du tableau suivant : 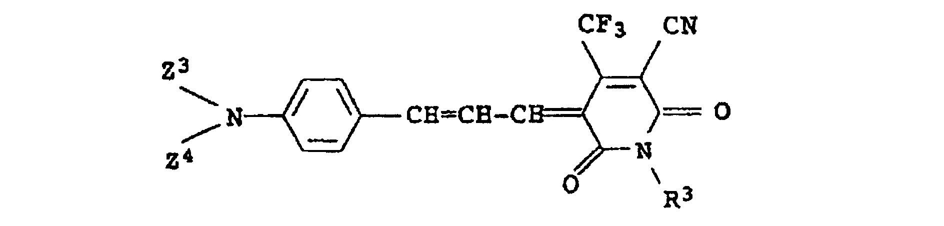
| Z³ | Z⁴ | R³ |
|---|---|---|
| Méthyle | Méthyle | Méthyle |
| Méthyle | Méthyle | Ethyle |
| Méthyle | Méthyle | n-Butyle |
| Méthyle | Méthyle | n-Hexyle |
| Ethyle | Ethyle | Méthyle |
| Ethyle | Ethyle | Ethyle |
| Ethyle | Ethyle | n-Butyle |
| Ethyle | Ethyle | n-Hexyle |

8. Procédé de transfert de colorants depuis un support sur un papier revêtu de plastique, **caractérisé en ce que** l'on utilise un support sur lequel se trouvent un ou plusieurs colorants méthine et/ou azaméthine selon l'une quelconque des revendications 1 à 7.

9. Procédé de teinture ou d'impression de matières synthétiques, **caractérisé en ce que** les matières synthétiques sont traitées avec un ou plusieurs colorants méthine et/ou azaméthine selon l'une quelconque des revendications 1 à 7.

10. Composition colorante comprenant au moins un colorant méthine ou azaméthine selon l'une quelconque des revendications 1 à 7.

11. Utilisation d'un colorant méthine ou azaméthine selon l'une quelconque des revendications 1 à 7, pour le transfert de colorants depuis un support sur un papier revêtu de plastique.

12. Utilisation d'un colorant méthine ou azaméthine selon l'une quelconque des revendications 1 à 7, pour la teinture ou l'impression de matières synthétiques.

13. Procédé de préparation des composés selon la revendication 1, **caractérisé en ce que** pour la préparation des composés de formule I, dans laquelle X représente CH, on fait réagir un aldéhyde de formule III
R¹ ― CH = CH ― CHO (III)
avec une trifluorométhylpyridone de formule IV 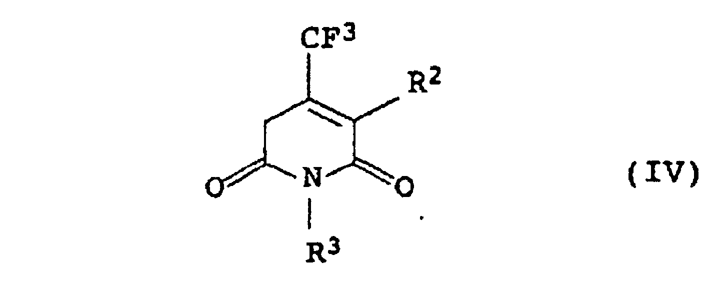 ou
pour la préparation des composés de formule I, dans laquelle X représente N, on fait réagir un composé de formule V :
R¹ ― CH₂ ― CH = NH (V)
avec une trifluorométhylpyridone de formule IV, où R¹, R² et R³ ont les significations indiquées dans l'une quelconque des revendications 1 à 7.

14. Colorant méthine de formule 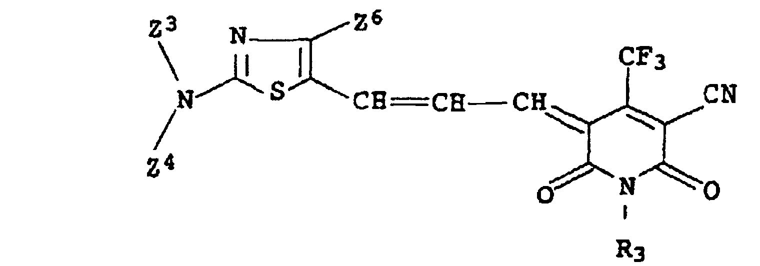 dans laquelle
Z³ et Z⁴ représentent C₄H₉,
Z⁶ représente C₆H₅, et
R³ représente COCH₃.
